# FASCICULE DE BREVET EUROPEEN

(11) **EP 2 979 082 B1**
(45) Date de publication et mention de la délivrance du brevet: **26.04.2023**
(21) Numéro de dépôt: 14718687.8
(22) Date de dépôt: 27.03.2014
(51) Int. Cl.: G01N 25/72, G01N 29/44, G06T 7/00

(54) **PROCÉDÉ ET SYSTÈME DE DÉTECTION DE DÉFAUTS SUR UN OBJET**
VERFAHREN UND SYSTEM ZUR ERKENNUNG VON DEFEKTEN AUF EINEM OBJEKT
METHOD AND SYSTEM FOR DETECTING DEFECTS ON AN OBJECT

(30) Priorité: 29.03.2013 FR 1352860; 29.03.2013 FR 1352859
(43) Date de publication de la demande: 03.02.2016
(73) Titulaire: Safran Aircraft Engines, 75015 Paris (FR)
(72) Inventeur: BENSE, William, F-77550 Moissy-Cramayel Cedex (FR); GEREZ, Valerio, F-77550 Moissy-Cramayel Cedex (FR)
(74) Mandataire: Brevalex
(86) Numéro de dépôt international: PCT/FR2014/050730
(87) Numéro de publication internationale: WO 2014/155011

(56) Documents cités:
- DE-A1-102010 032 241
- FR-A1- 2 815 123
- GB-A- 2 161 602
- US-A- 5 245 424
- US-A1- 2006 151 703
- US-A1- 2007 250 245
- US-A1- 2008 000 299
- US-A1- 2011 222 754
- US-B1- 6 512 843

## Description

### DOMAINE TECHNIQUE

La présente invention concerne le domaine de détection de défauts sur un objet et plus particulièrement, pour la surveillance des éléments tournants d'un moteur d'aéronef.

### ÉTAT DE LA TECHNIQUE ANTÉRIEURE

Il existe de nombreuses techniques utilisant des procédés optiques ou sonores pour détecter des défauts dans un objet. L'avantage de ces techniques est qu'ils peuvent être utilisés de manière non intrusive.

Par exemple dans le domaine aéronautique lors des tests de production ou d'inspections des pales d'un moteur, on applique différentes techniques de contrôles non destructifs basés sur l'utilisation de caméras thermiques. Ces techniques consistent à utiliser un émetteur de chaleur mobile pour chauffer la pale et une caméra thermique mobile pour prendre une image infrarouge de la pale. L'analyse de l'image se base sur la comparaison d'un nombre très élevé de zones de l'image afin de détecter des défauts dans la pale. US-5245424 décrit un procédé de détection de défauts dans un objet, comportant la formation d'une image de l'objet, la construction de subdivisions de ladite image, et le calcul d'une différence entre paramètres (luminosité accumulée) des subdivisions voisines pour détecter un défaut. La taille desdites subdivisions est choisie selon les buts d'inspection.

US-6512843 décrit un procédé de détection de défauts dans un objet, comportant la formation d'une image de l'objet, la construction de subdivisions de ladite image, et le calcul d'une différence entre des subdivisions voisines pour détecter un défaut.

GB-2161602 décrit un procédé d'inspection de la surface d'un objet, comportant la formation d'une image représentative dudit objet à partir de signaux ultrasonores relatifs à l'objet, et la construction de subdivisions de ladite image selon des résolutions adaptées par l'opérateur à l'étendue de la zone inspectée.

Ainsi, les méthodes actuelles nécessitent la réalisation de calculs pouvant prendre un temps non négligeable, sauf à utiliser des calculateurs particulièrement puissants et très coûteux.

En outre, il est difficile de savoir quelle granularité adopter (i.e., quelle est la résolution de la zone à comparer) alors qu'on ne connaît pas les défauts qu'on recherche.

L'objet de la présente invention est par conséquent de proposer un procédé de détection simple à mettre en oeuvre sans passer par des calculs complexes et capable de détecter rapidement et avec précision des défauts sur un objet ou élément d'un moteur sans présenter les inconvénients précités.

### EXPOSÉ DE L'INVENTION

La présente invention concerne un procédé de détection de défauts sur un objet, comportant les étapes suivantes :
- former une image représentative dudit objet à partir de signaux relatifs à l'objet,
- construire des subdivisions de ladite image selon des résolutions auto-adaptatives, et
- calculer des différentiels entre différentes subdivisions pour détecter une subdivision anormale indicative de prémices de panne.

Le procédé permet de détecter des défauts de pratiquement toutes les tailles dans un délai raisonnable.

Le procédé selon l'invention est défini dans la revendication 1.

Avantageusement, le procédé comporte une phase de confirmation comprenant une comparaison des différentiels relatifs à une subdivision anormale appartenant à une dernière image avec des différentiels relatifs à une même subdivision anormale appartenant à chacune d'un nombre déterminé de précédentes images dudit objet.

Ceci permet de confirmer la détection de défauts tout en évitant les fausses alarmes.

Avantageusement, le procédé comporte:
- une génération d'alerte d'importance haute ou très haute s'il est constaté que les différentiels ont augmenté au cours de dernières images, et
- une génération d'alerte d'importance moyenne s'il est constaté que les différentiels restent constants au cours de dernières images.

Ceci permet d'évaluer l'importance des prémices de panne ou de défauts.

Selon l'invention, les étapes de construction des subdivisions et de calcul des différentiels comportent les étapes suivantes :
- (a1) quadriller ladite image en une pluralité de subdivisions courantes,
- (a2) calculer des premiers différentiels courants entre chaque subdivision courante et des subdivisions courantes voisines,
- (a3) vérifier s'il existe une subdivision courante pour laquelle des premiers différentiels courants avec au moins un premier nombre déterminé de subdivisions voisines sont indicatifs d'anomalie,
- (a4) calculer, au cas où l'étape précédente (a3) est confirmée, des seconds différentiels courants entre ladite subdivision courante et des subdivisions courantes éloignées,
- (a5) vérifier si ladite subdivision courante présente avec au moins un deuxième nombre déterminé de subdivisions courantes éloignées, des seconds différentiels courants indicatifs d'anomalie,
- (a6) déclarer ladite subdivision courante comme étant invalide au cas où l'étape précédente (a5) est confirmée,
- (a7) re-quadriller une zone recouvrant ladite subdivision courante invalide pour former de nouvelles subdivisions chevauchant la précédente subdivision invalide, les nouvelles subdivisions étant considérées comme les actuelles subdivisions courantes,
- (a8) répéter les étapes (a2)-(a6) pour chacune des nouvelles subdivisions courantes de ladite zone de recouvrement,
- (a9) faire un masque ET dans ladite zone de recouvrement entre les précédentes subdivisions invalides et les nouvelles subdivisions formant ainsi des subdivisions de tailles réduites comprenant au moins une subdivision invalide, lesdites subdivisions de tailles réduites étant considérées comme les actuelles subdivisions courantes,
- (a10) vérifier si la taille de l'actuelle subdivision courante est plus grande qu'une résolution prédéterminée, et
- (a11) réitérer, au cas où l'étape précédente (a10) est confirmée, les étapes précédentes (a2)-(a10) pour chaque actuelle subdivision courante, sinon, déclarer la ou les subdivision(s) courante(s) invalide(s) comme subdivision(s) anormale(s).

Ainsi, ce procédé est basé sur des zooms et un nombre optimal de comparaisons pertinentes permettant de réduire la charge de calcul et de ne pas préjuger de la taille du défaut au-delà de la résolution.

Avantageusement, on vérifie à l'étape (a3) si les premiers différentiels courants sont supérieurs à un premier seuil prédéterminé, et on vérifie à l'étape (a5) si les seconds différentiels courants sont supérieurs à un deuxième seuil prédéterminé.

Ceci permet de détecter les défauts en tenant compte des erreurs ainsi que d'éventuelles différences de contextes entre des régions éloignées.

Avantageusement, le procédé comporte une construction d'une base de données d'apprentissage enregistrant des différentiels sains entre différentes subdivisions de l'image et on calcule à l'étape (a3) les différences entre les premiers différentiels courants et des différentiels sains correspondants pour vérifier si elles sont supérieures à un niveau prédéterminé et on calcule à l'étape (a5) les différences entre les seconds différentiels courants et des différentiels sains correspondants pour vérifier si elles sont supérieures à un deuxième niveau prédéterminé.

Ceci permet de tenir compte d'inhomogénéités pouvant exister au sein de l'objet.

Avantageusement, ledit objet est un élément tournant d'un moteur d'aéronef.

En effet, le traitement numérique selon l'invention est peu coûteux en calcul et peut donc être facilement mis en oeuvre par des moyens de traitement embarqués dans un aéronef.

Selon un mode de réalisation, les signaux relatifs audit objet sont des signaux infrarouges provenant de l'objet de sorte que ladite image représentative dudit objet est une image infrarouge traduisant un champ thermique en phase transitoire après le réchauffement de l'objet par une sollicitation thermique.

Selon un autre mode de réalisation, les signaux relatifs audit objet sont des signaux ultrasonores provenant de l'objet de sorte que ladite image représentative dudit objet est une image traduisant des ondes ultrasonores réfléchies par l'objet.

L'invention vise également un système de détection de défauts sur au moins un élément tournant d'un moteur d'aéronef, comportant :
- des moyens d'excitations embarqués pour provoquer l'émission de signaux par ledit élément tournant,
- des moyens d'acquisition embarqués pour acquérir les signaux envoyés par ledit élément tournant, et
- des moyens de traitement configurés pour réaliser les étapes du procédé selon l'invention.

Selon un premier mode de réalisation du système selon l'invention, les moyens d'excitations sont des moyens chauffants pour réchauffer ledit élément tournant du moteur par une sollicitation thermique, et les moyens d'acquisition sont des moyens thermographiques pour acquérir une image infrarouge traduisant un champ thermique en phase transitoire dudit élément tournant.

Selon un deuxième mode de réalisation du système selon l'invention, les moyens d'excitations sont des moyens d'émission d'ondes ultrasonores, et les moyens d'acquisition sont des moyens de réception d'ondes ultrasonores réfléchies par l'objet.

On décrit également un système automatique de détection de défauts sur au moins un élément tournant d'un moteur d'aéronef, comportant :
- des moyens chauffants embarqués pour réchauffer ledit élément tournant du moteur par une sollicitation thermique,
- des moyens thermographiques embarqués pour acquérir au moins une image infrarouge traduisant un champ thermique en phase transitoire dudit élément tournant, et
- des moyens de traitement pour calculer des différentiels relatifs à une composante du champ thermique entre différentes subdivisions de ladite image afin de détecter des variations de ladite composante du champ thermique indicatives de défauts sur ledit élément tournant.

Ainsi, on peut surveiller à chaque vol et de manière automatique les éléments tournants du moteur pour détecter les premiers signes de fatigue. Ceci permet d'effectuer une maintenance prédictive et pas simplement une maintenance préventive dans la mesure où on peut changer les éléments rotatifs quand ils connaissent vraiment des dommages, augmentant ainsi la rentabilité (moins de pièces changées) et la sécurité (moins de risque de perte d'aubes). L'analyse est réalisée selon des mesures différentielles qui permettent de s'affranchir du contexte. En particulier, le fait de réaliser des comparaisons entre des zones spatialement proches permet d'éviter des problèmes dus à l'éloignement de la source de chaleur ou l'éclairement par le soleil.

Avantageusement, lorsque le différentiel correspondant à une subdivision courante est indicatif d'anomalie, les moyens de traitement sont configurés pour calculer d'autres différentiels en réorganisant les subdivisions et/ou en affinant la subdivision courante de comparaison afin de localiser les emplacements des défauts.

Ceci permet de réduire le nombre de subdivisions à étudier et par conséquent de réduire le temps de calcul et la sollicitation d'un calculateur.

Avantageusement, les moyens de traitement sont configurés pour enregistrer à chaque vol lesdits différentiels relatifs aux champs thermiques des différentes subdivisions et pour analyser l'évolution desdits différentiels de vol en vol.

Ceci permet de consolider le résultat de la détection et de suivre de manière systématique la santé des éléments tournants de vol en vol.

Avantageusement, le système de détection comporte une base de données de signatures de dégradations représentatives de différentes formes de dégradations et de leurs états d'avancement, et les moyens de traitement sont configurés pour comparer les différentiels relatifs aux champs thermiques des subdivisions présentant des défauts auxdites signatures de dégradations.

Ceci permet de déterminer le type de défaut le plus probable.

Selon un mode de réalisation avantageux, les moyens chauffants sont constitués d'au moins un élément chauffant antigivrage déjà existant dans le moteur.

Ceci permet de réduire la masse embarquée et permet aussi de surveiller le moyen chauffant lui-même.

Selon une variante, les moyens chauffants sont destinés à réchauffer ledit élément par des pulsations thermiques.

Ainsi, l'élément tournant peut être réchauffé en un temps suffisamment court pour que le matériau de l'élément tournant n'atteigne pas une température constante.

Selon cette variante, les moyens de traitement sont configurés pour calculer des différentiels entre une amplitude du champ thermique d'une subdivision courante et des amplitudes des champs thermiques des subdivisions voisines.

Selon une autre variante, les moyens chauffants sont destinés à réchauffer ledit élément par des ondes thermiques périodiques.

Selon cette autre variante, les moyens de traitement sont configurés pour calculer des déphasages entre le champ thermique d'une subdivision courante et les champs thermiques des subdivisions voisines.

La détection selon le déphasage a l'avantage d'être peu influencée par l'éloignement de la source de chaleur ou l'éclairement du soleil, car on ne mesure pas la température mais le déphasage.

Avantageusement, l'élément tournant est une pale d'une roue aubagée dudit moteur.

### BRÈVE DESCRIPTION DES DESSINS

D'autres caractéristiques et avantages de l'invention apparaîtront à la lecture de modes de réalisation préférentiels de l'invention faits en référence aux figures jointes parmi lesquelles :
La Fig. 1 illustre de manière schématique un système de détection de défauts sur un objet, selon l'invention ;
La Fig. 2 est un algorithme illustrant différentes étapes d'un procédé de détection selon un mode de réalisation préféré de l'invention ;
Les Figs. 3A-3E sont des quadrillages d'une image illustrant de manière schématique les étapes de l'organigramme de la Fig. 2 ;
Les Figs. 4A-4D illustrent la détection de défauts ponctuels et progressifs sur différents quadrillages, selon l'invention ;
La Fig. 5 est un algorithme de détection comprenant une phase de confirmation selon un premier mode de réalisation du procédé, selon l'invention ;
La Fig. 6 est un algorithme de détection comprenant une phase de confirmation selon un deuxième mode de réalisation du procédé, selon l'invention ;
La Fig. 7 illustre de manière schématique un système de détection de défauts sur un élément tournant d'un moteur d'aéronef, selon un premier mode de réalisation du système de la Fig. 1 ;
La Fig. 8 est un schéma en bloc illustrant les étapes de détection de défauts sur une roue aubagée du moteur, selon le système de la Fig. 7 ; et
La Fig. 9 illustre de manière schématique un système de détection de défauts sur un élément tournant d'un moteur d'aéronef, selon un deuxième mode de réalisation du système de la Fig. 1.

### EXPOSÉ DÉTAILLÉ DE MODES DE RÉALISATION PARTICULIERS

Le concept à la base de l'invention repose sur un procédé de détection de défauts dans un objet en utilisant une image représentative de l'objet et en réalisant un nombre minimal de comparaisons entre des zones dont la taille s'adapte de manière itérative à la taille des défauts.

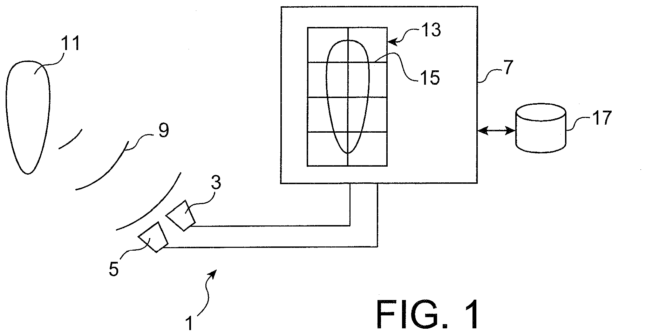

La Fig. 1 illustre de manière schématique un système de détection de défauts sur un objet, selon l'invention.

Le système de détection 1 comporte des moyens d'excitations 3, des moyens d'acquisition 5, et des moyens de traitement 7 de données.

Les moyens d'excitations sont destinés à provoquer l'émission de signaux 9 par l'objet 11 tandis que les moyens d'acquisition 5 sont destinés à acquérir ces signaux.

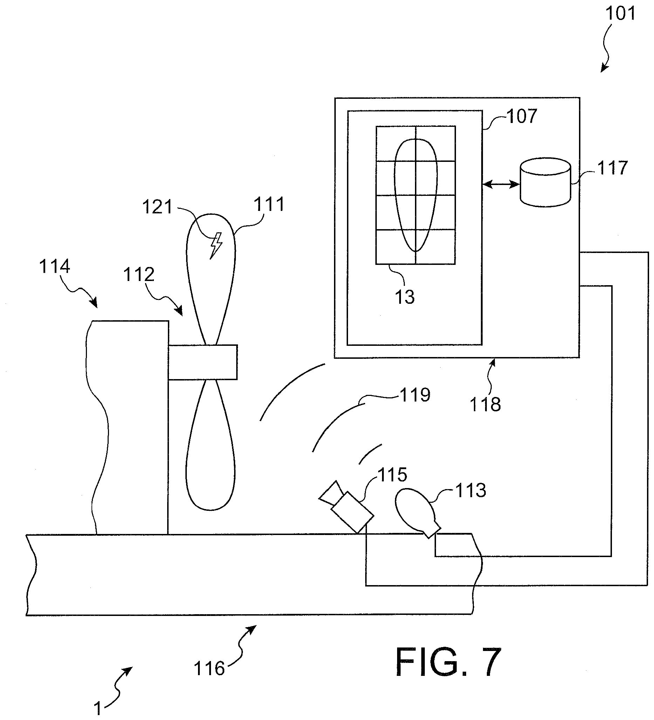

A titre d'exemple, les moyens d'excitations 3 sont des moyens chauffants pour réchauffer l'objet 11 par une sollicitation thermique et les moyens d'acquisition 5 sont des moyens thermographiques pour acquérir une image infrarouge traduisant un champ thermique en phase transitoire (voir Fig. 7).

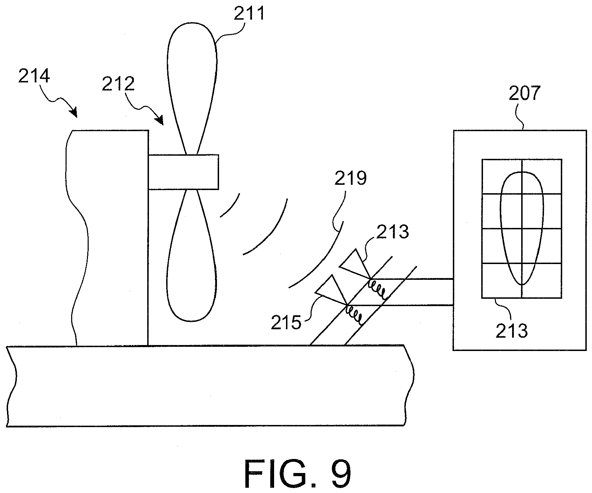

Selon un autre exemple, les moyens d'excitations 3 sont des moyens d'émission d'ondes ultrasonores et les moyens d'acquisition 5 sont des moyens de réception d'ondes ultrasonores réfléchies par l'objet 11 (voir Fig. 9).

Les moyens de traitement 7 sont destinés à traiter les signaux 9 relatifs à l'objet afin de détecter des défauts et de générer des alertes.

Plus particulièrement, les moyens de traitement 7 sont configurés pour former un graphe ou une image 13 représentative de l'objet 11 à partir de signaux 9 relatifs à l'objet. L'image 13 est définie ici comme une représentation de l'objet 11 au sens numérique ou mathématique du terme où chaque point de l'image 13 correspond à un antécédent de l'objet 11. Ainsi, l'image peut correspondre par exemple à une représentation optique, thermique, ou acoustique de l'objet 11.

Les moyens de traitement 7 sont aussi configurés pour construire de manière itérative des subdivisions de l'image 13 selon des résolutions auto-adaptatives, c'est-à-dire selon des résolutions qui s'adaptent à l'étendue du défaut.

En outre, les moyens de traitement 7 sont configurés pour calculer de manière itérative des différentiels entre différentes subdivisions afin de détecter une subdivision anormale indicative de prémices de panne.

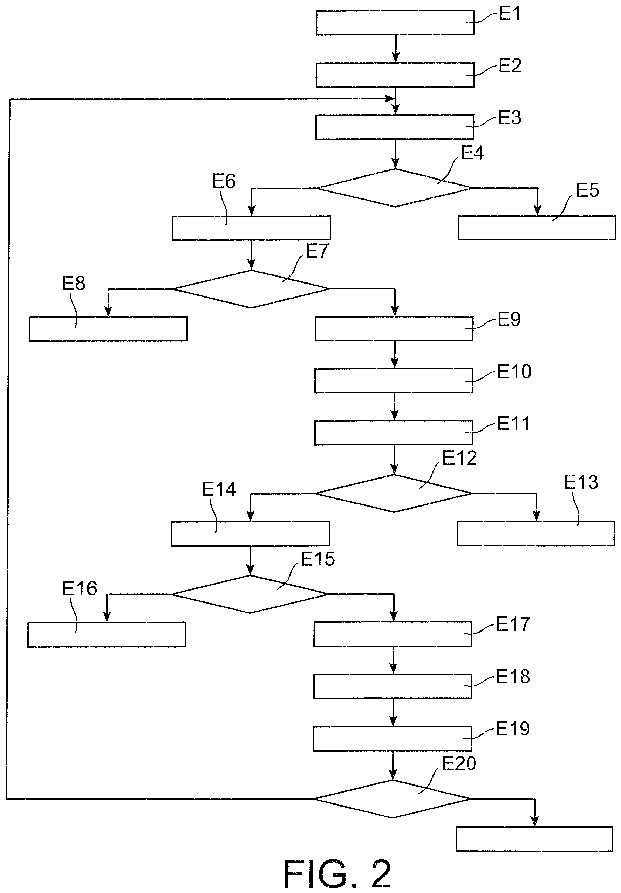

La Fig. 2 est un algorithme illustrant différentes étapes d'un procédé de détection selon un mode de réalisation de l'invention.

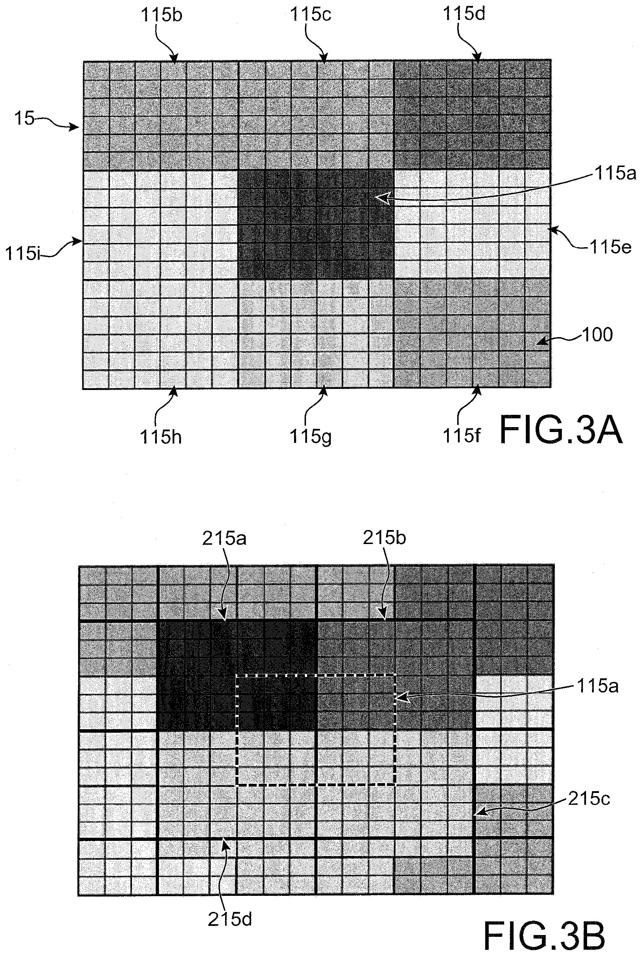

En outre, les Figs. 3A-3E sont des quadrillages d'une image 13 illustrant de manière schématique les étapes de l'organigramme de la Fig. 2.

A l'étape E1 les moyens de traitement 7 sont configurés pour former l'image 13 représentative de l'objet 11 à partir de signaux 9 relatifs à cet objet. L'image 13 peut par exemple être la traduction d'un champ thermique acquis par des moyens thermographiques ou bien la traduction de signaux ultrasonores acquis par des capteurs d'ondes ultrasonores. On définit aussi une résolution déterminée correspondant à une taille minimale de défauts. Cela permet d'une part de ne pas alerter sur des défauts acceptables et d'autre part de donner un point d'arrêt à l'algorithme.

A l'étape E2 les moyens de traitement 7 sont configurés pour quadriller l'image 13 en une pluralité de subdivisions courantes. Les dimensions des subdivisions sont sélectionnées en fonction de la taille de l'objet de façon à ce qu'on puisse avoir des voisins proches et des voisins éloignés.

La Fig. 3A montre un quadrillage 15 d'une partie de l'image 13 en neuf subdivisions 115a-115i en forme de grands carreaux de mêmes tailles. Les petits carreaux 225 représentent la résolution sélectionnée. Par ailleurs, on notera que les subdivisions peuvent aussi être de forme hexagonale ou triangulaire ou de toute autre forme géométrique.

A l'étape E3 les moyens de traitement 7 sont configurés pour calculer des premiers différentiels courants entre chaque subdivision courante 115a et les subdivisions courantes voisines 115b-115i. Par exemple, le différentiel représente la différence des valeurs d'un paramètre physique (e.g., champ optique, thermique ou sonore) entre une subdivision et une subdivision voisine.

Plus particulièrement, les moyens de traitement 7 calculent une composante du paramètre physique relative à chaque subdivision et comparent ensuite la composante de chaque subdivision à celles de ses voisines.

Selon l'exemple de la Fig. 3A chaque carreau est comparé à ses huit voisins en calculant le différentiel entre d'une part la composante du paramètre physique dans un carreau 115a et d'autre part la composante relative à chacun des huit carreaux 115b-115i limitrophes.

L'étape E4 est un test où les moyens de traitement 7 sont configurés pour vérifier s'il existe ou non, une subdivision courante pour laquelle des premiers différentiels courants avec au moins un premier nombre déterminé de subdivisions voisines sont indicatifs d'anomalie.

Un indicateur d'anomalie peut par exemple être la comparaison du différentiel avec un seuil prédéterminé. En variante, l'indicateur d'anomalie peut être défini par la différence entre le différentiel observé et un différentiel sain mesuré lors d'une phase d'apprentissage et la comparaison de cette différence avec un niveau prédéterminé. On notera que le seuil ou niveau prédéterminé peut dépendre de plusieurs facteurs comme par exemple le nombre de voisins, la taille de la subdivision 115a, le paramètre physique mesuré, la précision souhaitée, etc.

Si le résultat du test de l'étape E4 est négatif, alors on considère à l'étape E5 que l'objet 11 est valide.

En revanche, si on trouve une subdivision pour laquelle les premiers différentiels courants, avec au moins un premier nombre déterminé de subdivisions voisines sont indicatifs d'anomalie, alors on considère que cette subdivision est potentiellement invalide et on passe à l'étape E6.

On notera que si les différentiels indiquent une anomalie avec seulement une autre subdivision voisine, on peut vraisemblablement considérer que c'est une imprécision ou erreur de mesure. Autrement dit, pour que la subdivision soit déclarée potentiellement invalide, il faut qu'il y ait au moins un nombre seuil de subdivisions voisines avec qui les différentiels sont indicatifs d'anomalie. Ce nombre seuil peut aussi dépendre du nombre de voisins, de la taille de la subdivision, du paramètre physique mesuré, et de la précision souhaitée. Dans l'exemple de la Fig. 3A, ce nombre seuil est choisi égal à quatre et cette figure montre que la subdivision 115a au centre présente par rapport à au moins quatre de ses voisines 115b-115i un différentiel indicatif d'anomalie.

Ainsi, lorsque le test de l'étape E4 est confirmé, les moyens de traitement 7 sont configurés pour comparer à l'étape E6, la subdivision potentiellement invalide avec des subdivisions éloignées. En particulier, les moyens de traitement 7 calculent des seconds différentiels courants entre la subdivision courante potentiellement invalide et des subdivisions courantes éloignées. Par exemple on peut comparer le carreau central incriminé 115a de la Fig. 3A avec seulement huit voisins éloignés (non représentés) afin de limiter la charge de calcul. On notera que les voisins sont choisis de façon différente pour les subdivisions aux bords de l'image car on ne peut pas prendre des voisins dans toutes les directions. Ainsi, afin de tenir compte des effets de bord, on peut choisir des seuils différents selon que les subdivisions potentiellement invalides sont aux bords ou à l'intérieur de l'image.

L'étape E7 est un test où les moyens de traitement 7 sont configurés pour vérifier si la subdivision courante présente avec au moins un deuxième nombre déterminé de subdivisions courantes éloignées, des seconds différentiels courants indicatifs d'anomalie. On prend des voisines suffisamment éloignées pour sortir de la zone potentiellement invalide. Si le résultat du test de l'étape E7 est négatif, alors on considère à l'étape E8 que la subdivision incriminée est valide. En effet, si une subdivision est différente de ses proches voisines mais pas des voisines éloignées, on peut déduire que la subdivision en question est valide mais pas les proches voisines. Dans ce cas, on peut envisager un statut particulier, mais de toute façon, les proches voisines seront aussi testées et détectées par l'algorithme.

En revanche, si le résultat du test de l'étape E7 est confirmé, alors on considère à l'étape E9 que la subdivision incriminée est invalide.

Comme précédemment, une anomalie est détectée lorsque le différentiel est supérieur à un seuil prédéterminé. En outre, pour que la subdivision incriminée soit déclarée invalide, il faut qu'il y ait au moins un deuxième nombre déterminé de subdivisions voisines avec qui les différentiels sont indicatifs d'anomalie. La Fig. 3A montre aussi que la subdivision 115a au centre présente par rapport à au moins quatre de ses voisines éloignées (non représentées) un différentiel indicatif d'anomalie.

Le fait de comparer une subdivision donnée avec ses voisines proches et ensuite avec des voisines éloignées permet de confirmer l'invalidité de la subdivision et d'adapter la résolution des subdivisions. En effet, si les différentiels entre la subdivision donnée et les voisines proches sont indicatifs d'une anomalie et si l'anomalie résulte d'un réel défaut alors les différentiels avec les voisines éloignées doivent aussi indiquer une anomalie étant donné qu'on s'éloigne de la zone défectueuse. En particulier, si l'anomalie est due à un défaut progressif, alors les différentiels avec des voisines éloignées sont forcément plus importants qu'avec des voisines proches. D'un autre côté, si le défaut est très ponctuel alors les différentiels avec des voisines éloignées sont au moins aussi importants qu'avec des voisines proches.

On notera qu'afin d'éviter des fausses alarmes, on ne prend pas les mêmes seuils pour les comparaisons proches et éloignées. En effet, les subdivisions éloignées sont normalement suffisamment éloignées de la zone incriminée et présentent donc par rapport à cette dernière des différentiels assez importants. Toutefois, le contexte dans les zones éloignées peut être différent et par conséquent, les valeurs du paramètre physique entre les deux zones peuvent présenter des écarts significatifs sans qu'il y ait forcément un défaut. Ainsi, pour éviter les fausses alarmes, il est avantageux de choisir un seuil plus grand pour une comparaison entre deux subdivisions éloignées que pour une comparaison entre deux subdivisions proches.

Ensuite, les moyens de traitement 7 sont configurés pour calculer d'autres différentiels en réorganisant les subdivisions et/ou en affinant leurs tailles.

En effet, à l'étape E10, les moyens de traitement 7 sont configurés pour re-quadriller une zone 215 recouvrant la subdivision 115a déclarée invalide (voir Fig. 3B). Ainsi, on forme de nouvelles subdivisions qui chevauchent la subdivision invalide. La nouvelle zone 215 est homothétique à la subdivision invalide par exemple de rapport strictement compris entre 1 et 2.

L'exemple de la Fig. 3B illustre de manière schématique une réorganisation des subdivisions selon un simple décalage d'un demi-carreau horizontalement et d'un demi-carreau verticalement. Ainsi, cet exemple, montre que quatre nouveaux carreaux courants 215a-215d recouvrent le précédent carreau courant invalide 115a (représenté en pointillé). Chacun de ces quatre nouveaux carreaux 215a-215d recouvre une partie du précédent carreau 115a plus une partie du voisinage immédiat de ce dernier. Ceci permet de scruter tout le voisinage de la zone déclarée invalide.

A nouveau, les moyens de traitement 7 calculent des nouveaux différentiels relatifs au nouveau découpage des zones de comparaisons.

En effet, les nouvelles subdivisions 215a-215d sont considérées comme les actuelles subdivisions courantes et pour chacune de ces nouvelles subdivisions on réalise les étapes E11-E17 qui sont équivalentes aux étapes E3-E9 respectivement.

Ainsi, à l'étape E11 les moyens de traitement 7 sont configurés pour calculer des premiers différentiels courants entre chaque nouvelle subdivision courante 215a-215d et des subdivisions courantes voisines.

L'étape E12 est un test où les moyens de traitement 7 sont configurés pour vérifier s'il existe une nouvelle subdivision courante pour laquelle des premiers différentiels courants avec au moins un premier nombre déterminé de subdivisions voisines sont indicatifs d'anomalie. Si le résultat du test de l'étape E12 est négatif, alors on considère à l'étape E13 que la subdivision est valide, sinon, on considère qu'elle est potentiellement invalide et on passe à l'étape E14.

A l'étape E14, les moyens de traitement 7 sont configurés pour comparer la nouvelle subdivision potentiellement invalide avec des subdivisions éloignées.

L'étape E15 est un test où les moyens de traitement 7 sont configurés pour vérifier si la nouvelle subdivision courante présente avec au moins un deuxième nombre déterminé de subdivisions courantes éloignées des seconds différentiels courants indicatifs d'anomalie. Si le résultat du test de l'étape E15 est négatif, alors on considère à l'étape E16 que la subdivision incriminée est valide. En revanche, si le résultat du test de l'étape E15 est confirmé, alors on considère à l'étape E17 que la nouvelle subdivision incriminée est invalide.

Ainsi, à l'issue de l'étape E17, on a au moins une nouvelle subdivision invalide et une précédente subdivision invalide. L'exemple de la Fig. 3B montre un nouveau carreau courant invalide 215a et un précédent carreau invalide 115a. Le recoupement entre les actuel et précédent carreaux invalides donne plus de précision sur la localisation du défaut.

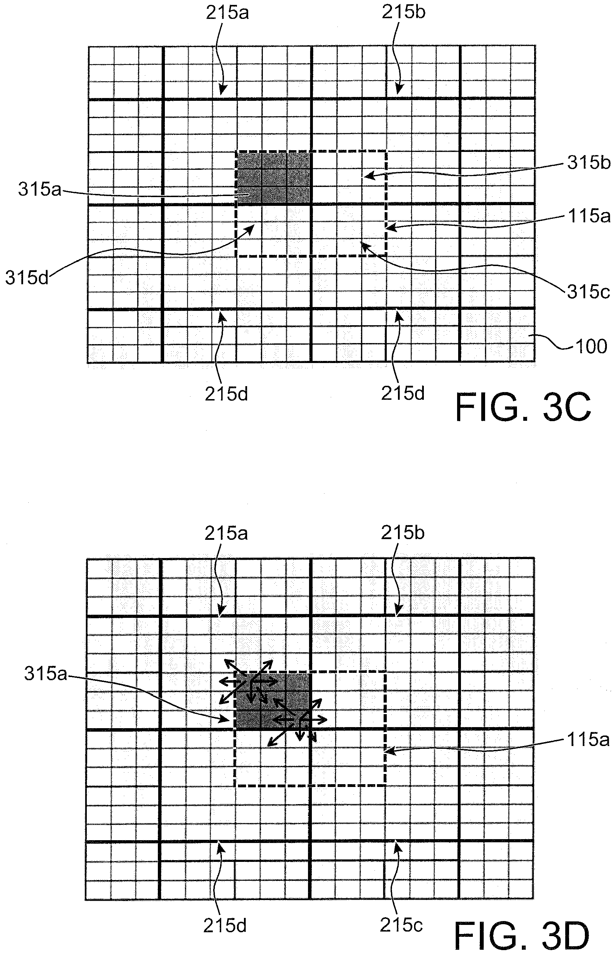

En effet, à l'étape E18 les moyens de traitement 7 sont configurés pour faire un masque selon une opération logique ET entre les précédentes subdivisions invalides 115a et les nouvelles subdivisions 215a-215d dans la zone 215 de recouvrement. Ceci forme des subdivisions 315a-315d de tailles réduites comprenant au moins une subdivision invalide 315a de taille réduite (voir Fig. 3C). Ces nouvelles subdivisions 315a-315d de tailles réduites sont considérées comme les actuelles subdivisions courantes.

A l'étape E19 les moyens de traitement 7 sont configurés pour vérifier si la taille de l'actuelle subdivision courante 315a-315d est plus grande que la résolution prédéterminée 100. Si oui, les moyens de traitement 7 sont configurés pour réitérer les étapes précédentes E3-E18 pour chaque actuelle subdivision courante, et sinon, on déclare à l'étape E20 la ou les subdivision(s) courante(s) invalide(s) comme subdivision(s) anormale(s).

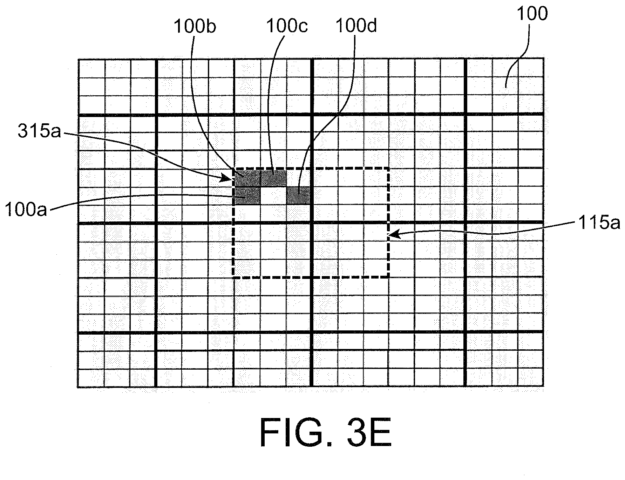

La Fig. 3C montre que le masque ET affine la zone en diminuant la longueur et la largeur du carreau d'un facteur 2. Toutefois, la taille du carreau invalide 315a reste supérieure à la taille du petit carreau 100 correspondant à la résolution et par conséquent, on recommence les mêmes étapes comme illustré sur la Fig. 3D. Finalement, la Fig. 3E montre que la résolution 100 est atteinte et les petits carreaux invalides 100a-100d sont localisés.

L'exemple des Figs. 3A-3E montre que le procédé de détection selon l'invention permet de réduire fortement le nombre d'étapes de calculs.

En effet, l'image selon l'exemple des Figs. 3A-3E comporte 18 × 18 = 324 petites cases 100. Ainsi, en faisant abstraction des effets de bords, si on comparait chaque case 100 avec ses huit cases voisines, on aurait 2592 comparaisons et la technique serait moins efficace car on ne détecterait que des anomalies très localisées sur une case 100.

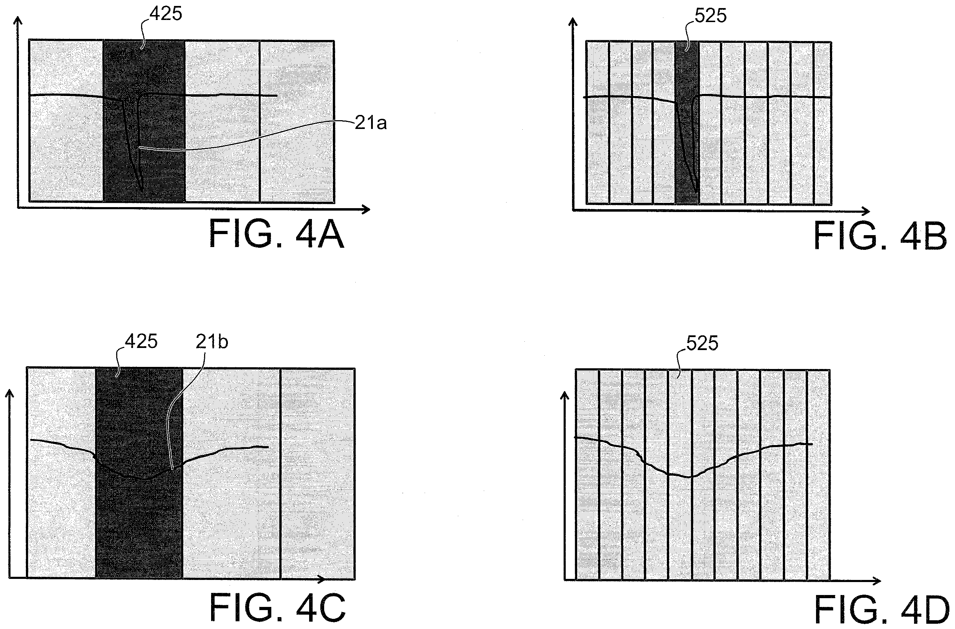

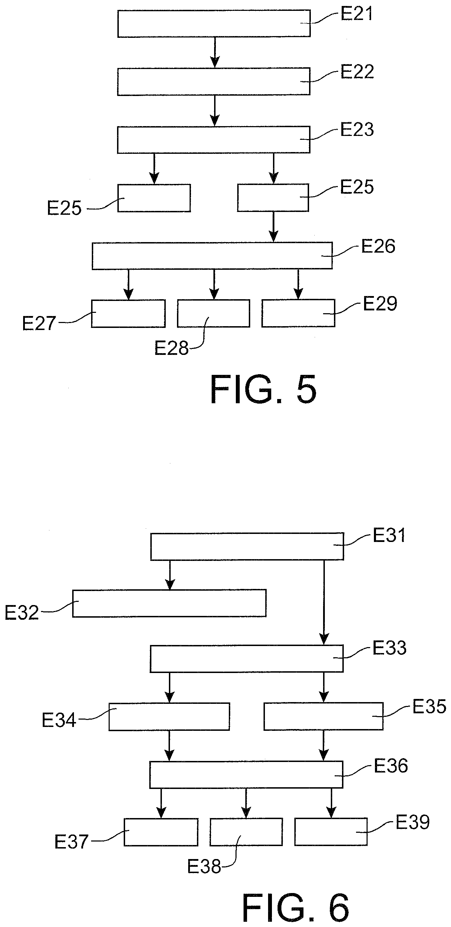

Avec la technique ci-dessus et en faisant toujours abstraction aux effets de bords, on réalise, à l'étape de la Fig. 5A, 9 × 8 = 72 comparaisons, à l'étape de la Fig. 5B, 4 × 8 = 32 comparaisons, à l'étape de la Fig. 5C, zéro comparaison, et finalement à l'étape de la Fig. 5D, 9 × 8 = 72 comparaisons, soit au total 176 comparaisons seulement. Ceci permet de réduire le temps de calcul et la sollicitation du calculateur.

Plus généralement, pour une image d'un objet de 100*cm* × 20*cm* et de résolution de 1*mm*, si on prenait indépendamment chaque zone de 1mm et la comparait avec ses huit voisines, on aurait, sans compter les effets de bord 1600000 comparaisons et on ne peut détecter que des défauts de 1*mm* ou des défauts très marqués.

Toutefois, en appliquant le procédé de détection selon l'invention, en prenant un quadrillage initial de 1cm et en supposant qu'il n'y a qu'un seul défaut, le nombre total de comparaisons est d'environ 16000.

Ainsi, le procédé selon l'invention réduit considérablement le nombre de calculs en optimisant le nombre de comparaisons. De plus, il permet de détecter des défauts dont la taille est comprise entre les dimensions d'une subdivision initiale 115a et la résolution 100 sélectionnée.

En effet, les Figs. 4A-4D illustrent la détection de défauts ponctuels et progressifs sur différents quadrillages.

Les Figs. 4A et 4B montrent qu'un défaut ponctuel 21a peut être détecté sur un grand carreau 425 ou sur un petit carreau 525. Toutefois, les Figs. 4C et 4D montrent qu'un défaut progressif 21b peut être détecté sur un grand carreau 425 mais pas sur un petit carreau 525. En effet, le différentiel entre un petit carreau 525 et ses voisins est très faible et ainsi on ne détecterait pas un défaut progressif avec une méthode classique qui ne considère que des petits carreaux.

La Fig. 5 est un algorithme de détection selon l'invention comprenant une phase de confirmation selon un premier mode de réalisation.

La phase de confirmation comprend une comparaison des différentiels relatifs à une subdivision anormale appartenant à une dernière image avec des différentiels relatifs à une même subdivision anormale appartenant à chacune d'un nombre déterminé de précédentes images de l'objet, les données des précédentes subdivisions anormales étant enregistrées dans une base de données 17 associée aux moyens de traitement.

L'étape E21 concerne la mesure ou l'acquisition d'un paramètre physique (e.g., champ optique, thermique ou sonore) relatif à l'objet 11 permettant la formation d'une image 13 de l'objet 11.

A l'étape E22, les données concernant le paramètre physique sont envoyées aux moyens de traitement 7.

A l'étape E23, les moyens de traitement 7 sont configurés pour traiter les données selon l'organigramme de la Fig. 2.

En particulier, aux étapes E4 et E12 (Fig. 2), on vérifie si les premiers différentiels courants sont supérieurs à un premier seuil prédéterminé. De même, aux étapes E7 et E15 (Fig. 2), on vérifie si les seconds différentiels courants sont supérieurs à un deuxième seuil prédéterminé. On notera que les valeurs des premier et deuxième seuils peuvent être modifiées en fonction de la taille de la subdivision et donc du rang de l'itération. Par exemple, à la première itération, la détection est choisie assez sensible (i.e., seuils faibles) pour permettre d'identifier les subdivisions anormales. En effet, si la subdivision est grande, on va éventuellement moyenner des zones normales et anormales à l'intérieur de la subdivision.

A l'issue de l'étape E23, si aucun défaut n'est constaté, alors à l'étape E24 on remet à zéro la base de données 17 concernant les dernières détections.

En revanche, si à l'issue de l'étape E23, une ou des subdivision(s) anormale(s) est(sont) détectée(s), alors à l'étape E25 on enregistre dans la base de données 17 les informations concernant la ou les dernières subdivision(s) anormale(s) avant d'aller à l'étape E26.

A l'étape E26, les moyens de traitement 7 sont configurés pour comparer les différentiels relatifs à la(les) subdivision(s) anormale(s) appartenant à la dernière image avec des différentiels relatifs à la(les) même(s) subdivision(s) anormale(s) appartenant à chacune des précédentes images de l'objet 11.

S'il est constaté que l'image 13 présente une anomalie pour la première fois, alors aucune alerte n'est générée (étape E27).

En revanche, s'il est constaté que les différentiels ont augmenté au cours de dernières images, alors une alerte d'importance haute est générée (étape E28). On peut ajouter un niveau d'alerte supplémentaire pour suivre la tendance des différentiels. Par exemple, une alerte d'importance très haute est générée si les différentiels augmentent et que l'extrapolation montre à échéance donnée (*e*.*g*. 10 vols) un dépassement d'un seuil limite prédéterminé.

Finalement, s'il est constaté que les différentiels restent constants au cours de dernières images, alors une alerte d'importance moyenne est générée (étape E29).

Par ailleurs, on peut attribuer différents niveaux de seuils correspondant à différents niveaux d'alertes.

La Fig. 6 est un algorithme de détection selon l'invention comprenant une phase de confirmation selon un deuxième mode de réalisation.

Les étapes de l'algorithme de la Fig. 6 sont identiques à celles de la Fig. 5 sauf pour les étapes E32 et E33.

Comme précédemment, l'étape E31 concerne la mesure ou l'acquisition d'un paramètre physique (e.g., champ optique, thermique ou sonore) relatif à l'objet 11 permettant la formation d'une image 13 de l'objet. Si les données correspondent à une première image, alors on passe à l'étape E32 et sinon, à l'étape E33.

L'étape E32 est une phase d'apprentissage au cours de laquelle une base de données d'apprentissage est construite en comparant les différentiels des subdivisions de la première image d'un objet sain. Ceci peut être réalisé selon les étapes de comparaisons entre des subdivisions voisines de l'organigramme de la Fig. 2.

Ainsi, on construit à l'étape E32 une base de données d'apprentissage enregistrant des différentiels sains entre différentes subdivisions de l'image saine d'origine sachant que cette dernière n'est pas forcément uniforme à cause des différences intrinsèques mais normales de l'objet.

Si l'image de l'objet n'est pas une première image, alors on passe à l'étape E33 où les moyens de traitement 7 sont configurés pour traiter les données selon l'organigramme de la Fig. 2.

Toutefois, aux étapes E4 et E12 (Fig. 2), on calcule les différences entre les premiers différentiels courants des subdivisons voisines et des différentiels sains correspondants pour vérifier si elles sont supérieures à un niveau prédéterminé. Aux étapes E7 et E15 (Fig. 2), on vérifie si les seconds différentiels courants entre des subdivisions éloignées et des différentiels sains correspondants sont supérieurs à un deuxième seuil prédéterminé.

Le procédé de détection de la présente invention est peu coûteux en calcul et peut donc être facilement mis en oeuvre par des moyens de traitement embarqués dans un aéronef pour par exemple détecter des défauts ou prémices de panne d'un élément tournant d'un moteur d'aéronef.

En effet, la Fig. 7 illustre de manière schématique un système de détection de défauts sur un élément tournant d'un moteur d'aéronef, selon un premier mode de réalisation du système de la Fig. 1.

L'élément tournant 111 est visible de l'extérieur et correspond par exemple à une pale ou aube d'une roue aubagée 112 ou à un capot tournant du moteur 114. La roue aubagée 112 peut appartenir à un compresseur du moteur 114 et peut par exemple correspondre à une soufflante carénée ou non carénée du moteur d'aéronef.

Selon le mode de réalisation de la Fig. 7, les signaux relatifs à l'élément tournant sont des signaux infrarouges provenant de l'élément et par conséquent, les moyens d'excitations sont des moyens chauffants 113 embarqués et les moyens d'acquisition sont des moyens thermographiques 115 embarqués.

Les moyens chauffants 113 sont destinés à réchauffer l'élément tournant 111 du moteur 114 par une sollicitation thermique 119. Bien entendu, la chaleur pénètre dans le matériau de l'élément tournant 3. Ainsi, les températures locales vont varier d'une région à une autre car la chaleur va plus ou moins pénétrer en fonction de la présence ou non de défauts 121. A titre d'exemple, les moyens chauffants 113 peuvent être constitués d'un ou de plusieurs émetteur(s) thermique(s) fixé(s) sur le moteur 114 ou l'aéronef 116 au regard de l'élément tournant 111. Ainsi, chaque émetteur thermique 113 reste à demeure sur l'aéronef 116 et peut être réglé pour chauffer l'élément tournant 121 de manière périodique ou pulsationelle.

Par ailleurs, les moyens thermographiques 115 sont destinés à acquérir au moins une image 113 infrarouge de l'élément tournant 111 traduisant, suite à la sollicitation thermique 119 du réchauffement, un champ thermique en phase transitoire. On notera que les moyens thermographiques 115 peuvent être constitués d'une ou de plusieurs caméra(s) thermique(s) fixée(s) sur le moteur 114 ou l'aéronef 116 au regard de l'élément tournant 111.

Avantageusement, les éléments tournants 111 sont filmés lors d'une rotation à très faible régime (c'est-à-dire, en début de phase de démarrage, en fin de phase d'arrêt ou lors d'un fonctionnement en moulinet « wind milling » au sol). Ceci permet d'avoir une vue complète des éléments tournants 111 sans perturber l'acquisition des images 113. L'intérêt de filmer à faible régime est l'utilisation d'une seule caméra pour détecter des défauts sur toutes les aubes, les unes après les autres. On peut bien entendu filmer à l'arrêt mais dans ce cas, il faut une pluralité de caméras pour détecter les défauts sur toutes les aubes.

On notera que le réchauffement et l'acquisition des images ont l'avantage de pouvoir se faire sans contact, ce qui permet d'une part de ne pas abîmer le matériau testé et, d'autre part, de ne pas avoir de capteurs à poser sur les pales 111 ou très près des pales, ce qui pourrait perturber leur aérodynamique. En outre, le fait que les moyens chauffants 113 et thermographiques 115 sont embarqués permet d'acquérir des images 113 à chaque vol, de manière automatique, et sans intervention humaine longue et coûteuse.

Les moyens de traitement 107 sont configurés pour acquérir l'image infrarouge 113 depuis les moyens thermographiques 115 et pour mettre en oeuvre les étapes du procédé de détection selon les organigrammes des Figs. 2, 5 ou 6.

Les différentiels peuvent être calculés relativement à une composante (par exemple, l'amplitude ou la phase) du champ thermique entre différentes subdivisions de l'image 113 infrarouge. La détection des variations de la composante du champ thermique est indicative de défauts ou prémices de rupture de l'élément tournant 111. Ainsi, on peut surveiller à chaque vol et de manière automatique les éléments tournants 111 du moteur 114 pour détecter les premiers signes de fatigue avant qu'une perte d'aube ne se produise. En particulier, le système de détection 101 est bien adapté pour surveiller les éléments tournants 111 en matériaux composites qui peuvent subir de la fatigue engendrant des défauts 121 non visibles sur leurs surfaces.

On notera que le fait de réaliser l'analyse des données selon des mesures différentielles sur des phases thermiques transitoires permet de s'affranchir du contexte tel que la température extérieure ou l'éclairement par le soleil. En effet, les conditions extérieures agissent de la même manière sur une subdivision courante à deux instants successifs.

Avantageusement, on peut exploiter les moyens de traitement 107 d'un calculateur 118 embarqué dans l'aéronef 116 ou dans un calculateur 118 intégré dans le moteur 114 d'aéronef de type EMU (Engine Monitoring Unit) pour exploiter le système de détection 101 selon l'invention. En particulier, le calculateur 118 peut être utilisé pour exécuter un programme d'ordinateur enregistré dans des moyens de stockage 117 du calculateur 118 et comportant des instructions de code pour la mise en oeuvre du procédé de détection selon l'invention.

On notera que les données acquises peuvent être directement traitées pendant le vol de l'aéronef. En variante, le traitement des données peut être réalisé après l'atterrissage de l'aéronef afin de ne pas surcharger le calculateur 118 durant le vol. Selon encore une autre variante, les données acquises peuvent être transmises au sol pour être traitées par une station de calcul.

Selon une première variante du mode de réalisation de la Fig. 7, les moyens chauffants 113 sont destinés à réchauffer l'élément tournant 111 par des pulsations thermiques ou des phases thermiques transitoires.

Les moyens chauffants 113 correspondent à un émetteur thermique (par exemple une lampe chauffante) fixé directement sur le moteur ou l'aéronef, au regard de l'élément tournant 111 pour chauffer ce dernier de manière pulsationelle. L'élément tournant est alors chauffé en un temps suffisamment court (quelques millisecondes) pour que le matériau de l'élément tournant n'atteigne pas une température constante. L'émetteur thermique est fixé à une distance prédéterminée de l'élément tournant pouvant varier de quelques millimètres à quelques mètres.

Les moyens thermographiques 115 correspondent par exemple à une caméra thermique installée à proximité de l'élément tournant par exemple, entre quelques centimètres et quelques mètres et acquièrent les images lors du chauffage.

Dans ce cas, les moyens de traitement 107 sont configurés pour calculer des différentiels entre une amplitude du champ thermique (c'est-à-dire, la température) d'une subdivision courante et des amplitudes (c'est-à-dire, températures) des champs thermiques des subdivisions voisines. Ainsi, si le matériau de l'élément tournant présente un défaut en surface ou en profondeur, la température à la surface suite à la sollicitation thermique pulsationelle sera différente. La comparaison des températures entre les différentes subdivisions permet alors de détecter les défauts.

Selon une deuxième variante du mode de réalisation de la Fig. 7, les moyens chauffants 113 sont destinés à réchauffer l'élément tournant 111 par des ondes thermiques périodiques pendant un temps déterminé, par exemple de l'ordre de quelques secondes. Dans ce cas, un émetteur thermique 113 est fixé sur le moteur (ou l'aéronef) au regard de l'élément tournant 111 à une distance prédéterminée pouvant varier de quelques millimètres à quelques mètres. L'émetteur thermique 113 correspond par exemple à une lampe chauffante de type flash envoyant une onde thermique périodique d'une fréquence prédéterminée pour chauffer l'élément tournant de manière périodique.

Une caméra thermique 115 est installée à proximité de l'élément tournant 111 par exemple, entre quelques centimètres et quelques mètres et acquiert les images lors du chauffage.

L'émetteur de chaleur 113 et la caméra thermique 115 peuvent être placés directement sur le fuselage ou la voilure de l'aéronef.

Dans cette deuxième variante, les moyens de traitement 107 sont configurés pour réaliser par exemple une analyse de Fourier pour déterminer la variation de phase entre les différentes subdivisions de l'image infrarouge de l'élément tournant. Si le matériau est uniforme, l'énergie thermique se répartit identiquement et il n'y a aucun déphasage entre les différentes zones. En revanche, si le matériau de l'élément tournant présente un défaut, l'énergie thermique ne va pas se propager de façon identique et l'onde thermique sera soit accélérée soit ralentie dans le défaut, ce qui se traduira par un déphasage. Ainsi, les moyens de traitement 107 calculent les déphasages entre le champ thermique d'une subdivision courante et les champs thermiques des subdivisions voisines afin de détecter les défauts.

On notera que cette deuxième variante a l'avantage d'être peu influencée par l'éloignement de la source de chaleur ou l'éclairement du soleil, car on ne mesure pas la température, mais le déphasage. Afin d'augmenter la précision des mesures, il est préférable que l'émetteur de chaleur ne soit pas trop éloigné de l'élément tournant.

Selon une troisième variante du mode de réalisation de la Fig. 7, les moyens chauffants 113 sont constitués d'au moins un élément chauffant antigivrage déjà existant dans le moteur.

En effet, si les éléments tournants 111 possèdent déjà des moyens de chauffage destinés à éviter le givre, le système de détection de la présente invention peut astucieusement utiliser cette source de chaleur et on peut donc omettre l'installation des moyens chauffants supplémentaires et par conséquent, réduire la masse embarquée.

Dans ce cas, l'élément chauffant antigivrage est réglé, lors des autotests au démarrage par exemple, pour fournir de la chaleur pendant des durées prédéterminées.

Si l'élément chauffant n'est pas intégré dans la pale mais fixé à l'extérieur, alors le processus de détection est rigoureusement identique à celui des première et deuxième variantes. En revanche, si l'élément chauffant est suffisamment puissant et est intégré dans la pale, un temps de chauffe relativement court de quelques secondes suivi d'un temps de refroidissement de quelques secondes peut être utilisé.

Plus particulièrement, si l'élément chauffant est constitué par exemple de fils chauffants répartis sur la surface de la pale, on alimente l'élément chauffant avec une intensité de courant constante pendant un temps de chauffe déterminé puis on arrête de l'alimenter afin de faire décroître la température. Après un temps d'attente déterminé (toujours identique de vol en vol), on se trouve alors en phase transitoire du champ thermique et les moyens de traitement 107 déclenchent la caméra pour prendre une photo infrarouge. En cas d'anomalie du matériau de l'élément tournant, le refroidissement va être différent et on peut alors comparer chaque subdivision à ses voisines proches et éloignées, et ce de vol en vol. Par contre, dans ce cas, on ne peut pas détecter des défauts sous les fils car leur température faussera la réponse thermique du matériau à cet emplacement.

En revanche, si les fils chauffants ne sont pas en surface mais intégrés à l'intérieur du matériau de la pale, la situation est plus favorable que précédemment, car les fils ne cachent aucune surface de la pale et on accède directement à la réponse en épaisseur et on peut alors détecter les défauts internes et sur toute la surface de la pale. Le traitement des données est le même que celui détaillé précédemment.

En outre, les moyens de traitement 107 sont avantageusement configurés pour vérifier le bon fonctionnement de l'élément chauffant antigivrage en surveillant le différentiel d'amplitude des éléments tournants. Ainsi, si la réponse en amplitude est de plus en plus faible voire nulle ou de plus en plus forte de vol en vol même en considérant l'effet de vieillissement des pales sur les réponses thermiques, les moyens de traitement 107 peuvent incriminer l'élément chauffant.

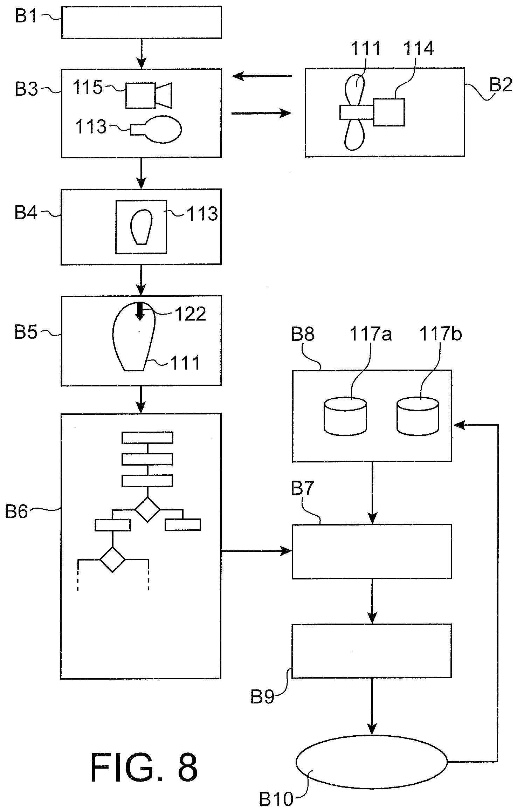

La Fig. 8 est un schéma en bloc illustrant les étapes de détection de défauts sur une roue aubagée du moteur, selon le système de la Fig. 7.

Selon cet exemple, l'élément tournant 111 correspond à chacune des pales de la roue aubagée 112.

Au bloc B1, les moyens de traitement 107 reçoivent des données depuis le moteur 114 (représenté par le bloc B2), concernant le régime de rotation de la roue aubagée 112 à surveiller. Les moyens de traitement 107 déclenchent le procédé de détection lorsque la roue aubagée 112 commence à tourner à très faible régime.

Au bloc B3, les moyens chauffants 113 réchauffent les pales 111 de la roue aubagée 112 du moteur 114 (bloc B2) par une sollicitation thermique 119 générant un champ thermique qui évolue selon des phases de chauffe et de refroidissement. On notera que la sollicitation thermique (une pulsation thermique ou une onde thermique périodique) pénètre dans le matériau de la pale 111 de sorte que si le matériau présente un défaut 121 (en surface ou en profondeur), l'amplitude et/ou la phase du champ thermique à la surface sera différente.

Ensuite, pendant que le champ thermique est dans sa phase transitoire de chauffe ou de refroidissement, la ou les caméra(s) thermique(s) 115 filme(nt) les pales 111 de la roue aubagée 112 du moteur (bloc B2) pour acquérir au moins une image 113 infrarouge des pales 111.

Ainsi, au bloc B4, au moins une image 113 infrarouge est générée. On notera que chaque caméra 115 thermique peut être configurée pour acquérir une image par pale ou une seule image pour toutes les pales de la roue aubagée 112.

Au bloc B5, des moyens d'identification 122 des pales 111 sont utilisés pour distinguer les différentes pales de la roue aubagée 112. Ceci permet de faire un suivi au cours du temps des différentes pales et d'identifier celle(s) qui présente(nt) des défauts.

Ces moyens d'identification sont par exemple, des moyens optiques de reconnaissance de forme. On peut par exemple utiliser la caméra thermique 115 elle-même couplée à un algorithme de reconnaissance de forme pour identifier les pales.

En variante, les moyens d'identification sont des moyens d'individualisation par un marquage 122 ou étiquetage sur une ou deux pales 111 de la roue aubagée 112. On peut individualiser les pales 111 en les numérotant par de la peinture ou tout autre matériau inséré dans la pale ou disposé à sa surface.

Au bloc B6, les moyens de traitement 107 réalisent les étapes de l'organigramme des Figs. 2, 5 ou 6. En particulier, les moyens de traitement 107 réalisent par exemple une analyse de Fourier pour calculer une composante (l'amplitude ou la phase) du champ thermique de chaque subdivision de l'image 113 infrarouge pour chacune des pales 111 et comparent entre elles les différentes subdivisions.

Plus particulièrement, lorsqu'une pulsation thermique est utilisée pour chauffer les pales 111 de la roue aubagée 112, alors la composante du champ thermique correspond à l'amplitude du champ thermique (c'est-à-dire, la température). En revanche, lorsqu'une onde thermique périodique est utilisée pour chauffer les pales 111, alors la composante du champ thermique correspond à la phase du champ thermique.

Si le matériau de la pale est uniforme, toute sa surface répond de façon identique à la sollicitation thermique 119 et par conséquent, la composante du champ thermique est constante sur toutes les zones. En revanche, si le matériau présente une aspérité en surface ou en profondeur, la composante du champ thermique à la surface suite à la sollicitation thermique 119 sera différente. Ainsi, en comparant les composantes sur différentes zones relativement proches, on peut détecter les défauts.

Lorsqu'un défaut est détecté au bloc B7, alors avant d'envoyer l'alerte, les moyens de traitement 107 comparent au bloc B7 les résultats sur plusieurs vols, pour voir si l'anomalie est toujours détectée (voir aussi étapes E26-E29 et E36-E39 des Figs. 5 et 6). En effet, les moyens de traitement 107 sont configurés pour enregistrer à chaque vol les différentiels relatifs aux champs thermiques des différentes subdivisions afin d'analyser l'évolution de ces différentiels de vol en vol. Ainsi, on peut quantifier l'évolution des défauts pour chaque pale 111 en comparant les données issues du vol courant avec des données des vols précédents stockées dans une base de données 117a (bloc B8).

Avantageusement, le système de détection 101 comporte une bibliothèque d'anomalies ou une base de données 117b (bloc B8) de signatures de dégradations représentatives de différentes formes de dégradations et de leurs états d'avancement. Ceci permet aux moyens de traitement 107 de comparer les différentiels relatifs aux champs thermiques des zones présentant des prémices de panne aux signatures caractéristiques de dégradations et ainsi de statuer sur le type de dégradation et sur l'état d'avancement de celle-ci.

La Fig. 9 illustre de manière schématique un système de détection de défauts sur un élément tournant d'un moteur d'aéronef, selon un deuxième mode de réalisation du système de la Fig. 1.

Selon ce mode de réalisation, les signaux relatifs à l'élément tournant sont des signaux ultrasonores provenant de l'élément tournant et par conséquent, les moyens d'excitations sont des moyens d'émission 213 d'ondes ultrasonores et les moyens d'acquisition sont des moyens de réception 215 d'ondes ultrasonores réfléchies par l'élément 211.

Les moyens d'émission 213 et de réception 215 peuvent former un seul dispositif. Plus particulièrement, le dispositif peut comprendre une source ultrasonore de type électro-capacitive ou piezzo-électrique couplée à un récepteur de même type (i.e., électro-capacitif si la source est electro-capacitive).

Les moyens d'émission 213 et de réception 215 sont embarqués et installés sur le moteur 214 par l'intermédiaire des moyens de pivotement et/ou de rotation 232. Ainsi, les moyens d'émission 213 et de réception 215 peuvent pivoter et/ou tourner pour balayer plusieurs zones de l'espace en scannant par exemple chaque élément tournant 211 d'une roue aubagée 212. Ainsi, il n'est pas nécessaire d'installer un dispositif émetteur/récepteur ultrasonore sur chaque aube. On notera que les éléments tournants 211 sont scannés lorsqu'ils sont à l'arrêt.

Avantageusement, la source ultrasonore 213 produit des ultrasons dans la gamme basse (par exemple, [50kHz-1MHz]) pour éviter une trop forte atténuation qui est fonction du carré de la fréquence. La fréquence peut être adaptée en fonction de la résolution souhaitée (i.e., de la taille des défauts recherchés). Plus la fréquence est grande et plus la résolution est importante, mais plus le signal est atténué et donc un compromis doit être trouvé en fonction de l'application.

Les moyens de traitement 207 sont configurés pour former une image 213 représentative de l'élément tournant 211 à partir des ondes ultrasonores 219 réfléchies par l'élément 211 et captées par les moyens de réception 215 et pour mettre en oeuvre les étapes du procédé de détection selon les organigrammes des Figs. 2, 5 ou 6.

Les différentiels peuvent être calculés relativement à l'intensité ou la direction des ondes ultrasonores 219 réfléchies. On notera que les ondes ultrasonores pénètrent très peu dans le matériau et vont donc se refléter à plus de 99,9 % (du fait de la différence d'impédance acoustique entre l'air et des métaux ou des matériaux composites). Ainsi, en cas d'anomalie ou de défaut de surface, la réflexion sera différente en intensité et/ou en direction et on peut alors détecter des petits défauts de structure suite par exemple, à un impact d'un corps étranger.

Ainsi, on peut surveiller à chaque vol et de manière automatique les éléments tournants 211 du moteur 214 pour détecter les premiers signes de fatigue avant qu'une perte d'aube ne se produise.

On notera que le fait de réaliser l'analyse des données selon des mesures différentielles sur des intensités ou directions des ondes réfléchies permet de s'affranchir du contexte tel que le fait que l'élément surveillé peut ne pas être toujours à la même distance des moyens de réception.

La présente invention permet ainsi de surveiller les éléments tournants en métal ou en matériaux composites d'un moteur d'aéronef afin de détecter les premiers signes de fatigue à l'aide des moyens fixés sur le moteur ou l'aéronef, à chaque vol, de manière automatique, et de manière individuelle. Elle s'applique avantageusement au suivi des aubes de la soufflante d'un turbofan, aux hélices d'un turbopropulseur ou d'un open rotor ainsi qu'aux capots tournants de ce dernier.

## Revendications

1. Procédé de détection de défauts sur un objet, comportant les étapes suivantes :
- une formation d'une image (13) représentative dudit objet (11) à partir de signaux (9) relatifs à l'objet,
- une construction des subdivisions (15) de ladite image selon des résolutions auto-adaptatives, lesdites résolutions s'adaptant de manière itérative à l'étendue du défaut, et
- un calcul itératif des différentiels représentant des différences de paramètres physiques entre différentes subdivisions pour détecter une subdivision anormale indicative de prémices de panne,
et en ce que les étapes de construction des subdivisions et de calcul des différentiels comportent les étapes suivantes :
- (a1) quadriller ladite image en une pluralité de subdivisions courantes,
- (a2) calculer des premiers différentiels courants entre chaque subdivision courante et des subdivisions courantes voisines,
- (a3) vérifier s'il existe une subdivision courante pour laquelle des premiers différentiels courants avec au moins un premier nombre déterminé de subdivisions voisines sont indicatifs d'anomalie, si le résultat est négatif alors on considère que l'objet est valide, sinon comparer la subdivision potentiellement invalide avec des subdivisions courantes éloignées,
- (a4) calculer, au cas où l'étape précédente (a3) est confirmée, des seconds différentiels courants entre ladite subdivision courante et des subdivisions courantes éloignées,
- (a5) vérifier si ladite subdivision courante présente avec au moins un deuxième nombre déterminé de subdivisions courantes éloignées des seconds différentiels courants indicatifs d'anomalie,
- (a6) déclarer ladite subdivision courante comme étant invalide au cas où l'étape de vérification précédente (a5) est confirmée,
- (a7) re-quadriller une zone recouvrant ladite subdivision courante invalide pour former de nouvelles subdivisions chevauchant la précédente subdivision invalide, les nouvelles subdivisions étant considérées comme les actuelles subdivisions courantes,
- (a8) répéter les étapes (a2)-(a6) pour chacune des nouvelles subdivisions courantes de ladite zone de recouvrement,
- (a9) faire un masque selon une opération logique ET dans ladite zone de recouvrement entre les précédentes subdivisions invalides et les nouvelles subdivisions formant ainsi des subdivisions de tailles réduites, lesdites subdivisions de tailles réduites étant considérées comme les actuelles subdivisions courantes,
- (a10) vérifier si la taille de l'actuelle subdivision courante est plus grande qu'une résolution prédéterminé, et
- (a11) réitérer, au cas où l'étape de vérification précédente (a10) est confirmée, les étapes précédentes (a2)-(a10) pour chaque actuelle subdivision courante, sinon, déclarer la ou les subdivision(s) courante(s) invalide(s) comme subdivision(s) anormale(s).

2. Procédé selon la revendication 1, **caractérisé en ce qu'**il comporte une phase de confirmation comprenant une comparaison des différentiels relatifs à une subdivision anormale appartenant à une dernière image (13) avec des différentiels relatifs à une même subdivision anormale appartenant à chacune d'un nombre déterminé de précédentes images dudit objet.

3. Procédé selon la revendication 2, **caractérisé en ce qu'**il comporte :
- une génération d'alerte d'importance haute ou très haute s'il est constaté que les différentiels ont augmenté au cours de dernières images, et
- une génération d'alerte d'importance moyenne s'il est constaté que les différentiels restent constants au cours de dernières images.

4. Procédé selon l'une quelconque des revendications 1 à 3,
**caractérisé en ce qu'**à l'étape (a3) on vérifie si les premiers différentiels courants sont supérieurs à un premier seuil prédéterminé, et **en ce qu'**à l'étape (a5) on vérifie si les seconds différentiels courants sont supérieurs à un deuxième seuil prédéterminé.

5. Procédé selon l'une quelconque des revendications 1 à 3, **caractérisé en ce qu'**il comporte une construction d'une base de données d'apprentissage enregistrant des différentiels sains entre différentes subdivisions de l'image et **en ce qu'**à l'étape (a3) on calcule les différences entre les premiers différentiels courants et des différentiels sains correspondants pour vérifier si elles sont supérieures à un niveau prédéterminé, et **en ce qu'**à l'étape (a5) on calcule les différences entre les seconds différentiels courants et des différentiels sains correspondants pour vérifier si elles sont supérieures à un deuxième niveau prédéterminé.

6. Procédé selon l'une quelconque des revendications précédentes, **caractérisé en ce que** ledit objet est un élément tournant (111) d'un moteur (114) d'aéronef.

7. Procédé selon l'une quelconque des revendications précédentes, **caractérisé en ce que** les signaux relatifs audit objet sont des signaux infrarouges provenant de l'objet de sorte que ladite image représentative dudit objet est une image infrarouge traduisant un champ thermique en phase transitoire après le réchauffement de l'objet par une sollicitation thermique.

8. Procédé selon l'une quelconque des revendications précédentes, **caractérisé en ce que** les signaux relatifs audit objet sont des signaux ultrasonores provenant de l'objet de sorte que ladite image représentative dudit objet est une image traduisant des ondes ultrasonores réfléchies par l'objet.

9. Système de détection de défauts sur au moins un élément tournant (111) d'un moteur (114) d'aéronef, comportant :
- des moyens d'excitations embarqués pour provoquer l'émission de signaux par ledit élément tournant,
- des moyens d'acquisition embarqués pour acquérir les signaux envoyés par ledit élément tournant, et
- des moyens de traitement configurés pour réaliser les étapes du procédé selon l'une quelconque des revendications précédentes.

10. Système selon la revendication 9, **caractérisé en ce que** les moyens d'excitations sont des moyens chauffants (113) pour réchauffer ledit élément tournant du moteur par une sollicitation thermique, et **en ce que** les moyens d'acquisition sont des moyens thermographiques (115) pour acquérir une image infrarouge traduisant un champ thermique en phase transitoire dudit élément tournant.

11. Système selon la revendication 9. **caractérisé en ce que** les moyens d'excitations sont des moyens d'émission (213) d'ondes ultrasonores, et **en ce que** les moyens d'acquisition sont des moyens de réception (215) d'ondes ultrasonores réfléchies par l'objet.

## Patentansprüche

1. Verfahren zum Erkennen von Fehlern an einem Objekt, das die folgenden Schritte aufweist:
- Erzeugen eines Bildes (13), das für das Objekt (11) repräsentativ ist, aus Signalen (9), die sich auf das Objekt beziehen,
- Erstellen einer Unterteilungen (15) des Bildes mit selbstanpassenden Auflösungen, wobei sich die Auflösungen iterativ an das Ausmaß des Defekts anpassen, und
- iteratives Berechnen von Differentialen, die Unterschiede in physikalischen Parametern zwischen verschiedenen Unterteilungen darstellen, um eine abnormale Unterteilung zu erkennen, die auf Vorstufen eines Ausfalls hindeutet,
und **gekennzeichnet dadurch, dass** die Schritte der Erstellung der Unterteilungen und der Berechnung der Differentiale die folgenden Schritte aufweisen:
- (a1) Rasterung des Bildes in mehrere momentane Unterteilungen,
- (a2) Berechnung aktueller erster Differentiale zwischen jeder momentaner Unterteilung und benachbarten momentanen Unterteilungen,
- (a3) Prüfen, ob es eine momentane Unterteilung gibt, für die aktuelle erste Differentiale mit mindestens einer ersten vorbestimmten Anzahl von benachbarten Unterteilungen auf eine Anomalie hinweisen, wobei das Objekt als valide betrachtet wird, wenn das Ergebnis negativ ist, wobei andernfalls die möglicherweise invalide Unterteilung mit entfernten momentanen Unterteilungen verglichen wird,
- (a4) Berechnen von aktuellen zweiten Differenzialen zwischen der aktuellen Unterteilung und entfernten aktuellen Unterteilungen für den Fall, dass der vorherige Schritt (a3) bestätigt wird,
- (a5) Prüfen, ob die momentane Unterteilung mit mindestens einer zweiten vorbestimmten Anzahl von entfernten momentanen Unterteilungen zweite aktuelle Differentiale aufweist, die auf eine Anomalie hinweisen,
- (a6) Feststellen, dass die aktuelle Unterteilung invalide ist, für den Fall, dass der vorherige Überprüfungsschritt (a5) bestätigt wird,
- (a7) erneutes Rastern eines Bereichs, der die momentane invalide Unterteilung überlagert, um neue Unterteilungen zu bilden, die die vorherige invalide Unterteilung überlappen, wobei die neuen Unterteilungen als die aktuellen momentanen Unterteilungen bestimmte werden,
- (a8) Wiederholen der Schritte (a2)-(a6) für jede der momentanen neuen Unterteilungen des Überlappungsbereichs,
- (a9) Maskieren gemäß einer logischen UND-Operation in dem Überlappungsbereich zwischen den vorherigen invaliden Unterteilungen und den neuen Unterteilungen, wodurch Unterteilungen mit reduzierter Größe ausgebildet werden, wobei die Unterteilungen mit reduzierter Größe als die aktuellen momentanen Unterteilungen bestimmt werden,
- (a10)Prüfen, ob die Größe der aktuellen momentanen Unterteilung größer als eine vorgegebene Auflösung ist, und
- (a11)Wiederholen der vorherigen Schritte (a2)-(a10) für jede aktuelle momentane Unterteilung, falls der vorherige Überprüfungsschritt (a10) bestätigt wird, andernfalls Bestimmen der momentanen Unterteilung(en) für invalide als abnormale Unterteilung(en).

2. Verfahren nach Anspruch 1, **dadurch gekennzeichnet, dass** es eine Bestätigungsphase aufweist, die einen Vergleich der Differentiale bezüglich einer abnormalen Unterteilung, die zu einem letzten Bild (13) gehört, mit Differentialen bezüglich einer gleichen abnormalen Unterteilung, die zu jedem einer bestimmten Anzahl von vorherigen Bildern des Objekts gehört, aufweist.

3. Verfahren nach Anspruch 2, **dadurch gekennzeichnet, dass** es aufweist:
- eine Alarmerzeugung von hoher oder sehr hoher Wichtigkeit, wenn festgestellt wird, dass die Differenziale im Laufe der letzten Bilder gestiegen sind, und
- eine Alarmerzeugung mittlerer Wichtigkeit, wenn festgestellt wird, dass die Differenziale während der letzten Bilder konstant bleiben.

4. Verfahren nach einem der Ansprüche 1 bis 3, **dadurch gekennzeichnet, dass** in Schritt (a3) geprüft wird, ob die ersten momentanen Differentiale größer als ein erster vorbestimmter Schwellenwert sind, und dass in Schritt (a5) geprüft wird, ob die zweiten momentanen Differentiale größer als ein zweiter vorbestimmter Schwellenwert sind.

5. Verfahren nach einem der Ansprüche 1 bis 3, **dadurch gekennzeichnet, dass** es eine Erstellung einer Lerndatenbank aufweist, die einwandfreie Differenziale zwischen verschiedenen Unterteilungen des Bildes aufzeichnet, und dass in Schritt (a3) die Differenzen zwischen den ersten momentanen Differenzialen und den entsprechenden einwandfreien Differenzialen berechnet werden, um zu überprüfen, ob sie größer als ein vorbestimmtes Niveau sind, und dass in Schritt (a5) die Differenzen zwischen den momentanen zweiten Differenzialen und entsprechenden einwandfreien Differenzialen berechnet werden, um zu überprüfen, ob sie größer als ein zweiter vorbestimmter Wert sind.

6. Verfahren nach einem der vorhergehenden Ansprüche, **dadurch gekennzeichnet, dass** das Objekt ein rotierendes Element (111) eines Triebwerks (114) eines Luftfahrzeugs ist.

7. Verfahren nach einem der vorhergehenden Ansprüche, **dadurch gekennzeichnet, dass** die Signale, die sich auf das Objekt beziehen, Infrarotsignale sind, die von dem Objekt stammen, so dass das repräsentative Bild des Objekts ein Infrarotbild ist, das ein Wärmefeld in der Übergangsphase nach der Erwärmung des Objekts durch eine thermische Belastung wiedergibt.

8. Verfahren nach einem der vorhergehenden Ansprüche, **dadurch gekennzeichnet, dass** die Signale, die sich auf das Objekt beziehen, Ultraschallsignale sind, die von dem Objekt ausgehen, so dass das repräsentative Bild des Objekts ein Bild ist, das Ultraschallwellen wiedergibt, die von dem Objekt reflektiert werden.

9. System zur Erkennung von Fehlern an mindestens einem drehenden Element (111) eines Flugzeugmotors (114), aufweisend:
- an Bord befindliche Erregermittel, um die Aussendung von Signalen durch das genannte rotierende Element zu bewirken,
- an Bord befindliche Erfassungsmittel, um die von dem genannten rotierenden Element gesendeten Signale zu erfassen, und
- Verarbeitungsmittel, die so konfiguriert sind, dass sie die Schritte des Verfahrens nach einem der vorhergehenden Ansprüche ausführen.

10. System nach Anspruch 9, **dadurch gekennzeichnet, dass** die Erregermittel Heizmittel (113) sind, um das Drehelement des Motors durch thermische Beanspruchung zu erwärmen, und dass die Erfassungsmittel thermografische Mittel (115) sind, um ein Infrarotbild zu erfassen, das ein Übergangsphasen-Wärmefeld des Drehelements wiedergibt.

11. System nach Anspruch 9, **dadurch gekennzeichnet, dass** die Erregermittel Mittel zum Senden (213) von Ultraschallwellen sind, und dass die Erfassungsmittel Mittel zum Empfangen (215) von Ultraschallwellen sind, die von dem Objekt reflektiert werden.

## Claims

1. Method for detecting defects on an object, **characterised in that** it comprises the following steps:
- formation of an image (13) representing said object (11) from signals (9) relating to the object,
- constructing subdivisions (15) of said image according to auto-adaptive resolutions, said resolutions iteratively adapting to the extent of the defect, and
- iterative calculation of the differentials representing differences in physical parameters between various subdivisions in order to detect an abnormal subdivision indicative of incipient failure,
and **in that** the steps of construction of the subdivisions and calculation of the differentials comprise the following steps:
- (a1) constructing a grid on said image with a plurality of current subdivisions,
- (a2) calculating the first current differentials between each current subdivision and adjacent current subdivisions,
- (a3) checking whether there exists a current subdivision for which first current differentials with at least a first given number of adjacent subdivisions indicate an abnormality, and should the result be negative, considering that the object is valid, otherwise comparing the potentially invalid subdivision with distant current subdivisions,
- (a4) calculating, should the previous step (a3) be confirmed, second current differentials between said current subdivision and distant current subdivisions,
- (a5) checking whether said current subdivision has, with at least a second given number of distant current subdivisions, second current differentials indicating an abnormality,
- (a6) declaring said current subdivision to be invalid should the previous verification step (a5) be confirmed,
- (a7) reconstructing a grid on a region covering said invalid current subdivision in order to form new subdivisions overlapping the previous invalid subdivision, the new subdivisions being considered to be the actual current subdivisions,
- (a8) repeating steps (a2)-(a6) for each of the new current subdivisions of said covering region,
- (a9) making a mask according to a logic AND operation in said covering region between the previous invalid subdivisions and the new subdivisions, thus forming subdivisions with reduced sizes, said subdivisions with reduced sizes being considered to be the actual current subdivisions,
- (a10) checking whether the size of the actual current subdivision is greater than a predetermined resolution, and
- (a11) reiterating, should the previous checking step (a10) be confirmed, the previous steps (a2)-(a10) for each actual current subdivision, otherwise declaring the invalid current subdivision or subdivisions to be an abnormal subdivision or subdivisions.

2. Method according to claim 1, **characterised in that** it comprises a confirmation phase comprising a comparison of the differentials relating to an abnormal subdivision belonging to a last image (13) with differentials relating to the same abnormal subdivision belonging to each of a given number of previous images of said object.

3. Method according to claim 2, **characterised in that** it comprises:
- generating an alert of high or very high importance if it is found that the differentials have increased during the last images, and
- generating an alert of medium importance if it is found that the differentials remain constant during the last images.

4. Method according to any one claims 1 to 3, **characterised in that**, at step (a3), it is checked whether the first current differentials are higher than a first predetermined threshold, and **in that** at step (a5) it is checked whether the second current differentials are higher than a second predetermined threshold.

5. Method according to any one of claims 1 to 3, **characterised in that** it comprises construction of a learning database recording sound differentials between various subdivisions of the image, and **in that** at step (a3) the differences are calculated between the first current differentials and the corresponding sound differentials in order to check whether they are higher than a predetermined level, and **in that** at step (a5) the differences are calculated between the second current differentials and corresponding sound differentials in order to check whether they are higher than a second predetermined level.

6. Method according to any one of the preceding claims, **characterised in that** said object is a rotating element (111) of an aircraft engine (114).

7. Method according to any one of the preceding claims, **characterised in that** the signals relating to said object are infrared signals coming from the object so that said image representing said object is an infrared image representing a transient thermal field after the heating of the object by thermal stressing.

8. Method according to any one of the preceding claims, **characterised in that** the signals relating to said object are ultrasound signals coming from the object so that said image representing said object is an image representing ultrasound waves reflected by the object.

9. System for detecting defects on at least one rotating element (111) of an aircraft engine (114) comprising:
- onboard excitation means installed so as to cause the emission of signals by said rotating element,
- onboard acquisition means installed so as to acquire the signals sent by said rotating element, and
- processing means configured so as to perform the steps of the method according to any one of the preceding claims.

10. System according to claim 9, **characterised in that** the excitation means are heating means (113) for heating said rotating element of the engine by means of a thermal stressing, and **in that** the acquisition means are thermographic means (115) for acquiring an infrared image representing a transient-phase thermal field of said rotating element.

11. System according to claim 9, **characterised in that** the excitation means are means (213) for emitting ultrasonic waves, and **in that** the acquisition means are means (215) for receiving ultrasonic waves reflected by the object.
